# EUROPÄISCHE PATENTSCHRIFT

(11) **EP 3 370 946 B1**
(45) Veröffentlichungstag und Bekanntmachung des Hinweises auf die Patenterteilung: **01.01.2020**
(21) Anmeldenummer: 16759980.2
(22) Anmeldetag: 23.08.2016
(51) Int. Cl.: B29C 51/26, B29C 51/14

(54) **VERFAHREN ZUM HERSTELLEN EINES BAUELEMENTS FÜR EIN KRAFTFAHRZEUG**
METHOD FOR PRODUCING A COMPONENT FOR A MOTOR VEHICLE
PROCÉDÉ DE RÉALISATION D'UN ÉLÉMENT DESTINÉ À UN VÉHICULE À MOTEUR

(30) Priorität: 04.11.2015 DE 102015014219
(43) Veröffentlichungstag der Anmeldung: 12.09.2018
(73) Patentinhaber: Audi AG, 85045 Ingolstadt (DE)
(72) Erfinder: UTECH, Guido, 80807 München (DE); WACHINGER, Michael, 86571 Winkelhausen (DE)
(86) Internationale Anmeldenummer: PCT/EP2016/001422
(87) Internationale Veröffentlichungsnummer: WO 2017/076479

(56) Entgegenhaltungen:
- EP-A1- 2 497 637
- DE-A1-102007 046 472

## Beschreibung

Die Erfindung betrifft ein Verfahren zum Herstellen eines ein Symbol aufweisenden Bauelements für ein Kraftfahrzeug oder für ein Haushaltsgerät gemäß dem Oberbegriff des Patentanspruchs 1.

Aus der DE 103 39 842 A1 ist ein Verfahren zur Herstellung einer Bedientaste mit Feinsymbolik bekannt. Dazu wird eine gravur- und ätzfähige Trägerplatte an einer Rückseite mit einem Laserstrahl mit einer Feinsymbolik versehen. Anschließend wird die Trägerplatte an ihrer Vorderseite mit einem materialabtragenden Vorgang mit einem Abtragungsmedium so lange behandelt, bis die in die Trägerplatte hinein reichende Symbolik an der Vorderseite mindestens teilweise oder vollständig freigelegt ist. Die Symbolik wird also in die Trägerplatte mittels einer Kombination von Lasergravur und Ätztechnik eingebracht. Anschließend kann die Trägerplatte mit einem Kunststoff hinterspritzt werden.

Aus der DE 10 2011 104 012 A1 und aus der DE 10 2010 016 6973 A1 sind zwei Verfahren, zur Herstellung eines galvanisch beschichteten Kunststoffbauteils bekannt.

Aus der EP 2 497 637 A1 ist eine galvanisierbare Kunststoff-Folie mit einer Lichttransmission größer 50% bekannt, insbesondere bevorzugt größer 80%, zur Herstellung von metallisierten Bauteilen, insbesondere partiell metallisierten Bauteilen.

Aufgabe der vorliegenden Erfindung ist es, ein Verfahren zum Herstellen eines Bauelements für ein Kraftfahrzeug oder für ein Haushaltsgerät der oben angegebenen Art zu schaffen, welches besonders kostengünstig ist.

Diese Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den jeweiligen Unteransprüchen angegeben.

Die Erfindung betrifft ein Verfahren zum Herstellen eines ein Symbol aufweisenden Bauelements für ein Kraftfahrzeug oder für ein Haushaltsgerät, bei welchem in ein Oberflächenelement aus einem Metallwerkstoff ein Symbol eingebracht wird, und bei welchem das Oberflächenelement mit einem Grundkörper aus einem Kunststoff versehen wird. Erfindungsgemäß ist es dabei vorgesehen, dass das Symbol erst nach dem Versehen des Oberflächenelements mit dem Grundkörper mittels eines Lasers in das Oberflächenelement eingebracht wird. Das Oberflächenelement wird in einem Tiefziehprozess geformt und mit dem Grundkörper durch Hinterspritzen versehen, wobei das Hinterspritzen nach dem Tiefziehprozess ohne Werkzeugwechsel erfolgt und das gleiche Werkzeug für das Formen des Oberflächenelements in dem Tiefziehprozess und für ein Halten des Oberflächenelements während des Versehens mit dem Grundkörper genutzt wird.

Das Bauelement kann beispielsweise ein Bedienelement einer Bedienvorrichtung eines Kraftfahrzeugs sein. Beispielsweise kann das Bedienelement einen Teil eines Schalters für die Bedienung einer Klimaanlage des Kraftfahrzeugs bilden. Aufgrund des Oberflächenelements aus einem Metallwerkstoff kann deswegen auch von einem Bedienteil mit einer Echtmetatiöberfiache gesprochen werden. Alternativ kann das Bauelement beispielsweise ein Zierteil in einem Innenraum oder an einer äußeren Oberfläche des Kraftfahrzeugs bilden. Das Symbol kann aufgrund der Einbringung mittels des Lasers eine Oberflächenstruktur in dem Bauelement bilden. Mittels des Lasers wird also wenigstens ein Teil des Oberflächenelements abgetragen. Der Grundkörper wird mittels eines Substrats hinter das Oberflächenelement ohne Werkzeugwechsel hinterspritzt. Das Symbol kann beispielsweise ein Zeichen sein, ein lso-Symbol, ein Buchstabe, eine Zahl oder eine geometrische Form. Insbesondere kann das Symbol zum Kennzeichnen einer durch eine Betätigung des als Bedienelement ausgebildeten Bauelements ausgelösten Funktion dienen.

Das Verfahren ist dabei besonders kostengünstig. Im Gegensatz zu herkömmlichen Verfahren muss das Oberflächenelement nicht mit Hilfe von teuren Werkzeugen in einem aufwendigen Prozess hergestellt werden. Insbesondere ist es nicht notwendig, das Symbol aus dem Oberflächenelement heraus zu stanzen, das Oberflächenelement dann im Stanzwerkzeug zu halten und zu einem Spritzgussverfahren zu transferieren, um es dann mit dem Grundkörper zu hinterspritzen. Durch das Versehen des Oberflächenelementsmit dem Grundkörper vor dem anschließenden Einbringen des Symbols wird bereits ein stabiles Element geschaffen, bevor das Symbol eingebracht wird. Dieses den Grundkörper und das Oberflächenelement umfassende Teil kann problemlos weiterbearbeitet werden, insbesondere berührungslos mittels des Lasers.

Außerdem werden für unterschiedliche Symbole keine unterschiedlichen Werkzeuge benötigt, wie dies beispielsweise bei einem Stanzprozess der Fall ist. Der Laser kann beispielsweise mittels einer Ablenkeinrichtung mit einem Spiegel so gesteuert beziehungsweise abgelenkt werden, dass eine frei wählbare Form eines Symbols in das Bauelement beziehungsweise in das Oberflächenelement eingebracht werden kann. Dadurch kann insbesondere jedes Oberflächenelement zunächst einheitlich ausgebildet sein und in gleicher Art und Weise mit einem Grundkörper in einer Großserie versehen werden, um erst anschließend das Bauelement mittels des Einbringens des Symbols für den jeweiligen Einsatz zu individualisieren.

insbesondere, wenn bei dem Symbol Inseln in dem Oberflächenelement vorgesehen sind, also Teilbereiche des Oberflächenelements, welche anderen Teilbereichen des Oberflächenelements nicht kontaktiert sind, ist das Verfahren ebenfalls vorteilhaft. Soll eine solche Insel in das Oberflächenelement mittels eines Stanzverfahrens eingebracht werden, muss die Insel mittels eines aufwendigen Werkzeugs für das Versehen mit dem Grundkörper, ihsbesondere für das Hinterspritzen, gehalten werden. Dabei kann auch eine Haftung der Insel an dem Grundkörper nicht ohne Weiteres gewährleistet werden. Auch eine Herstellung von Inseln mittels eines Gälvanisierungsverfahrens ist besonders aufwendig. Bei der Galvanisierung müssen die Inseln für die Galvanisierung elektrisch kontaktiert werden. Dies kann unter anderem bedeuten, dass keine echten Inseln vorgesehen werden können, da zu einer elektrischen Kontaktierung eine Brücke auf einer Sichtseite des Bauelements beziehungsweise des Oberflächenelements vorgesehen ist.

Es ist vorgesehen, dass das Oberflächenelement in einem Tiefziehprozess geformt wird, wobei das gleiche Werkzeug für das Formen des Oberflächenelements wie für ein Halten des Oberflächenelements während des Versehens mit dem Grundkörper genutzt wird. Dadurch kann beispielsweise auf ein zusätzliches Werkzeug für ein Spritzverfahren zum Versehen des Oberflächenelements mit dem Grundkörper verzichtet werden. Dadurch ist das Verfahren besonders kostengünstig. Außerdem muss das Oberflächenelement nicht von einem Werkzeug zu einem anderen Werkzeug nach dem Tiefziehen für das Versehen bzw. Hinterspritzen mit dem Grundkörper transferiert werden. So ist das Herstellverfahren besonders zuverlässig, da es nicht zu Fehlern und zu Beschädigungen von Oberflächenelementen bei einem Transfer von einem Werkzeug zu einem anderen Werkzeug kommen kann, insbesondere da diese noch nicht durch den Grundkörper verstärkt sind. Deshalb kann auch ein besonders dünnes Oberflächenelement eingesetzt werden. Dadurch kann das so hergestellte Bauelement besonders leicht und kostengünstig sein.

In weiterer vorteilhafter Ausgestaltung des erfindungsgemäßen Verfahrens ist es vorgesehen, dass das Oberflächenelement wenigstens in Teilbereichen komplett mittels des Lasers abgetragen wird. Dadurch ist das Symbol besonders gut haptisch erfühlbar. Außerdem ist es so möglich, das Symbol beispielsweise ohne beispielsweise eine farbige Lackierung in dem Teilbereich farblich zu markieren. In dem Teilbereich, in welchem das Oberflächenelement mittels des Lasers komplett abgetragen wurde, ist der darunterliegende Grundkörper zu sehen. Dieser Grundkörper kann eine andere Farbe als das Oberflächenelement aufweisen. Dadurch ist das Symbol wenigstens in diesem Teilbereich besonders gut erkennbar.

In weiterer vorteilhafter Ausgestaltung des erfindungsgemäßen Verfahrens ist es vorgesehen, dass der Grundkörper wenigstens bereichsweise aus einem wenigstens teilweise lichtdurchlässigen Material gebildet wird. Dieser Bereich aus wenigstens teilweise lichtdurchlässigem Material kann dabei in Überdeckung mit dem Teilbereich angeordnet werden, in welchem das Oberflächenelement komplett mittels des Lasers abgetragen wurde. Dadurch ist eine Durchleuchtung des Symbols wenigstens in diesem Teilbereich möglich. Dadurch kann das Symbol wenigstens teilweise beleuchtet werden und ist nun auch in einer dunklen Umgebung besonders gut erkennbar. Alternativ oder zusätzlich kann dabei auch ein Status einer mittels des als Bediehelement ausgebildeten Bauelements gesteuerten Funktion des Kraftfahrzeugs angezeigt werden. Soll der Grundkörper nur in Teilbereichen aus einem lichtdurchlässigen Material bestehen, eignet sich besonders gut ein Zweikomponentenspritzgussverfahren zum Herstellen des Grundkörpers. Dieses Zweikomponentenspritzgussverfahren wird auch als sogenanntes 2K-Spritzverfahren bezeichnet. Dabei kann ein Werkzeug mit einem Schieber zum Hinterspritzen genutzt werden.

Ein zweiter Aspekt der Erfindung betrifft ein mittels des erfindungsgemäßen Verfahrens hergestelltes Bauelement für ein Kraftfahrzeug oder für ein Haushaltsgerät, mit einem Oberflächenelement aus einem Metallwerkstoff, in welches ein Symbol eingebracht ist, und mit einem Grundkörper aus einem Kunststoff, mit welchem das Oberflächenelement getragen ist. Erfindungsgemäß ist es dabei vorgesehen, dass das Symbol nach dem Versehen des Oberflächenelements mit dem Grundkörper mittels eines Lasers in das Oberflächenelement eingebracht ist. Dadurch kann das Bauelement eine Oberflächenstruktur in dem Oberflächenelement aufweisen. Die Oberfläche des Bauelements kann teilweise aus dem Grundkörper gebildet sein.

Es ist vorgesehen, dass das Oberflächenelement auf seiner Sichtseite eine gebürstete Oberfläche aufweist. Dadurch ist das Bauelement mit seiner Echtmetalloberfläche besonders unempfindlich gegen Verunreinigungen. Dadurch kann ein besonders hochwertiges Bauelement erzeugt werden. Insbesondere ist ein Bedienelement mit einer Echtmetalloberfläche besonders unempfindlich gegenüber Abrieb durch Bötätigungshandlungen. Durch die gebürstete Oberfläche kann also die Standfestigkeit des Bauelements erhöht werden.

In weiterer vorteilhafter Ausgestaltung des Bauelements ist es vorgesehen, dass wenigstens ein Teilbereich des Oberflächenelements kontaktlos zu anderen Teilbereich des Oberflächenelements ist. Dieser Teilbereich, welcher kontaktlos zu den anderen Teilbereichen des Oberflächenelements ist, kann auch als Insel bezeichnet werden. Der oder die anderen Teilbereiche können dabei die restliche Oberfläche des Bauelements bilden. Der Teilbereich bildet also eine Insel in einem Symbol. Ist das Symbol beispielsweise die Zahl 0, bildet der Teilbereich die Füllung dieser Zahl 0. Beispielsweise sind Symbole von Bedienelementen für Kraftfahrzeuge zum Teil normiert. Durch das Vorsehen von Inseln in dem Oberflächenelement können beispielsweise Isovorschriften zu Symbolen eingehalten werden. Wird dagegen ein Galvanisierungsverfahren verwendet, sind die Inseln beispielsweise mit einer Brücke kontaktiert, wodurch Normen von Symbolen zum Teil nicht eingehalten werden können.

In weiterer vorteilhafter Ausgestaltung des Bauelements ist es vorgesehen, dass das Bauelement wenigstens eine seiner Sichtseite abgewandte Lichtquelle umfasst, mittels welcher wenigstens ein Teilbereich des Symbols beleuchtet ist. Beispielsweise kann die Lichtquelle an einer dem Oberflächenelement abgewandten Seite des Grundkörpers angeordnet sein. Dadurch kann das Symbol beleuchtet werden. Insbesondere bei einem Bedienelement kann dieses dann auch in Dunkelheit gut bedient werden. Alternativ oder zusätzlich kann dabei auch mittels der Lichtquelle ein Status einer mittels des als Bedienelement ausgebildeten Bauelements gesteuerten Funktion des Kraftfahrzeugs an dem Bauelement angezeigt werden. Dazu kann die Lichtquelle auch dazu ausgebildet sein, einstellbar Licht mit unterschiedlichen Farben und/oder in unterschiedlichen Bereichen unterschiedlich stark zu erzeugen.

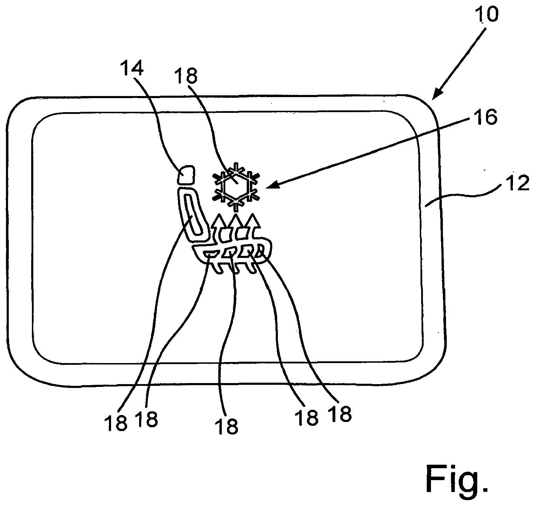

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombihationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die einzige Figur zeigt in einer Draufsicht ein durch ein Verfahren gemäß einem Ausführungsbeispiel der Erfindung hergestelltes Bauelement für ein Kraftfahrzeug, in welches ein Symbol eingebracht ist.

Die Figur zeigt in einer Draufsicht ein Bauelement 10 für ein Kraftfahrzeug. Bei dem Bauelement 10 handelt es sich um ein Bedienelement einer Klimaanlage des Kraftfahrzeugs. Mittels einer Betätigung des Bauelements 10 kann eine Sitzbelüftung des Kraftfahrzeugs aktiviert werden. Dies ist durch ein Symbol 16 in der Oberfläche des Bauelements 10 kenntlich gemacht.

Das Bauelement 10 umfasst ein Oberflächenelement 12 aus einem Metallwerkstoff. Deswegen kann das Bauetement 10 auch als Bedienelement mit Echtmetalloberfläche bezeichnet werden. Das Oberflächenelement 12 besteht dabei beispielsweise aus einem Aluminiumwerkstoff. Zur Schmutzresistenz ist dabei die Oberfläche des Oberflächenelements 12 gebürstet. Hinter das Oberflächenelement 12 ist ein Grundkörper 14 aus einem Kunststoff angeordnet. Der Grundkörper 14 ist dabei durch das Symbol 16 in dem Oberflächenelement 12 beziehungsweise in der Oberfläche des Bauelements 10 zu sehen. Das Symbol 16 wird durch jeweilige Freischneidungen in dem Oberflächenelement 12 erzeugt. Das Oberflächenelement 12 besteht dabei aus einem dünnen Metallblech, welches mittels des Grundkörpers 14 getragen ist. Das Metallblech besteht beispielsweise aus einem Metallwerkstoff wie einer Aluminiumlegierung. Der Grundkörper 14 wird beispielsweise gebildet, in dem ein Substrat hinter das Oberflächenelement 12 hinterspritzt wird. Der Grundkörper 14 besteht also aus einem Kunststoff.

Dabei ist es vorgesehen, dass das Symbol 16 erst in das Oberflächenelement 12 mittels eines Lasers eingebracht wird, nachdem dieser mit dem Grundkörper 14 versehen worden ist. Mittels des Lasers wird also das Oberflächenelement 12 in den Bereichen des Symbols 16 abgetragen. Damit ist es nicht mehr notwendig das Symbol 16 beispielsweise frei zu stanzen. Ein Freistanzen ist aufwendig, erfordert für unterschiedliche Symbole jeweils ein eigenes Werkzeug, und verkompliziert das Hinterspritzen mit dem Grundkörper 14 erheblich im Vergleich zum für die Herstellung des Bauelements 10 verwendeten Herstellungsverfahren.

Insbesondere können jeweilige Inseln 18 in dem Oberflächenelement 12 beziehungsweise in dem Symbol 16 problemlos gefertigt werden. Das Oberflächenelement 12 ist in dem Bereich der Inseln 18 bereits durch den Grundkörper 14 getragen. Dadurch haften diese Inseln 18 zuverlässig an dem Grundkörper 14. Es ist also kein spezielles Werkzeug zum Halten der Inseln 18 nach einem Stanzverfahren für ein Hinterspritzen notwendig. Ebenso ist es nicht, wie beispielsweise bei einer Herstellung einer Echtmetalloberfläche mittels eines Geilvahisierurigsverfahrens, notwendig, diese Inseln 18 beispielsweise mittels eines Steges für die Galvanisierung elektrisch zu kontaktieren. Dadurch können problemlos Symbole 16 hergestellt werden, welche einer Isonorm entsprechen, die vollständige Inseln 18 erfordert. Ebenfalls lassen sich auch Insellösungen mit beispielsweise den Buchstaben wie A, B oder O einfach herstellen beziehungsweise darstellen.

Das Oberflächenelement 12 kann in einem Tiefziehprozess geformt werden, wobei das gleiche Werkzeug für das Formen des Oberflächenelements 12 wie für ein Halten des Oberflächenelements 12 während des Versehens mit dem Grundkörper 14 genutzt wird. Das Oberflächenelement 12 muss also beispielsweise für ein Hinterspritzen mit dem Grundkörper 14 nicht mehr in ein weiteres Werkzeug transferiert werden. Dadurch kann das Oberflächenelement 12 besonders dünn sein. Außerdem ist kein zusätzliches Werkzeug notwendig, wodurch das Verfahren besonders kostengünstig ist.

Der Grundkörper 14 kann wenigstens in jeweiligen Teilbereichen, welche hinter dem Symbol 16 in dem freigelaserten Bereich des Oberflächenelements 12 liegen, wenigstens teilweise lichtdurchlässig sein. Dadurch ist es möglich, das Symbol 16 von hinten zu beleuchten. Dadurch kann das Bauelement 10 auch ein sogenanntes Nachtdesign aufweisen. Zu diesem Zweck kann das Bauelement 10 wenigstens eine seiner Sichtseite abgewandte Lichtquelle umfassen, mittels welcher wenigstens ein Teilbereich des Symbols 16 beleuchtbar ist. Die Lichtquelle kann hierzu beispielsweise an einer dem Oberflächenelement 12 abgewandten Seite des Grundkörpers 14 angeordnet sein. Bei der Lichtquelle kann es sich beispielsweise um eine LED handeln. Die Lichtquelle kann dabei dazu ausgebildet sein, Licht einstellbar in unterschiedlichen Bereichen unterschiedlich stark und/oder mit einer einstellbaren Farbe abzugeben, um mittels des beleuchteten Symbols 16 auch einen Status einer Funktionseinheit des Kraftfahrzeugs anzeigen zu können. Diese Funktionseinheit beziehungsweise deren Status kann dabei vorzugsweise mittels einer Betätigung des Bauelements 10 gesteuert werden.

Das Bauelement 10 kann auch Teil eines Haushaltsgeräts sein. Ein Haushaltsgerät kann auch als weiße Ware bezeichnet werden und beispielsweise als Waschmaschine, Spülmaschine oder Kühlschrank ausgebildet sein. Beispielsweise kann das Bauelement 10 kostengünstig eine Front eines Kühlschrankes verkleiden. Dieser Kühlschrank weist dann eine hochwertige Echtmetallfront mit wenigstens einem Symbol auf. Alternativ oder zusätzlich kann das Bauelement 10 beispielsweise an der Front Kühlschrank auch ein Bedienelement bilden. Das Bauelement 10 kann beispielsweise einen Taster bilden, mittels welchem eine Temperatur des Kühlschranks einstellbar ist.

## Patentansprüche

1. Verfahren zum Herstellen eines ein Symbol (16) aufweisenden Bauelements(10) für ein Kraftfahrzeug oder für ein Haushaltsgerät, bei welchem in ein Oberflächenelement (12) aus einem Metallwerkstoff das Symbol (16) eingebracht wird, und bei welchem das Oberflächenelement (12) mit einem Grundkörper (14) aus einem Kunststoff versehen wird,
wobei
das Symbol (16) erst nach dem Versehen des Oberflächenelements (12) mit dem Grundkörper (14) mittels eines Lasers in das Oberflächenelement (12) eingebracht wird,
**dadurch gekennzeichnet, dass**
das Oberflächenelement (12) in einem Tiefziehprozess geformt und mit dem Grundkörper (14) durch Hinterspritzen versehen wird, wobei das Hinterspritzen nach dem Tiefziehprozess ohne Werkzeugwechsel erfolgt und das gleiche Werkzeug für das Formen des Oberflächenelements (12) und für ein Halten des Oberflachenelements (12) während des Versehens mit dem Grundkörper (14) genutzt wird.

2. Verfahren nach Anspruch 1,
**dadurch gekennzeichnet, dass**
das Oberflächenelement (12) wenigstens in einem Teilbereich komplett mittels des Lasers abgetragen wird.

3. Verfähren nach Anspruch 2,
**dadurch gekennzeichnet, dass**
der Grundkörper (14) wenigstens bereichsweise aus einem wenigstens teilweise lichtdurchlässigen Material gebildet wird.

## Claims

1. Method for manufacturing a component (10), having a symbol (16), for a motor vehicle or for a household device, in the case of which the symbol (16) is introduced into a surface element (12) made of a metal material, and in the case of which the surface element (12) is furnished with a main body (14) made of a plastic,
wherein
the symbol (16) is introduced by means of a laser into the surface element (12) only after the furnishing of the surface element (12) with the main body (14),
**characterised in that**
the surface element (12) is formed in a deep drawing process and is furnished with the main body (14) by means of back-injection moulding, wherein the back-injection moulding takes place after the deep drawing process without tool change and the same tool is used for the forming of the surface element (12) and for a holding of the surface element (12) during the furnishing with the main body (14).

2. Method according to claim 1,
**characterised in that**
the surface element (12) at least in a partial area is ablated completely by means of the laser.

3. Method according to claim 2,
**characterised in that**
the main body (14) is formed at least in some regions from an at least partially translucent material.

## Revendications

1. Procédé de fabrication d'un élément (10) présentant un symbole (16) pour un véhicule automobile ou pour un appareil électroménager, pour lequel le symbole (16) est introduit dans un élément de surface (12) en un matériau métallique, et pour lequel l'élément de surface (12) est pourvu d'un corps de base (14) en une matière plastique,
dans lequel
le symbole (16) n'est introduit qu'après la dotation de l'élément de surface (12) du corps de base (14) au moyen d'un laser dans l'élément de surface (12),
**caractérisé en ce que**
l'élément de surface (12) est formé dans un processus d'emboutissage profond et est doté du corps de base (14) par injection par derrière, dans lequel l'injection par derrière est effectuée après le processus d'emboutissage profond sans changement d'outil et le même outil est utilisé pour le formage de l'élément de surface (12) et pour une retenue de l'élément de surface (12) pendant la dotation du corps de base (14).

2. Procédé selon la revendication 1,
**caractérisé en ce que**
l'élément de surface (12) est enlevé complètement au moyen du laser au moins dans une zone partielle.

3. Procédé selon la revendication 2,
**caractérisé en ce que**
le corps de base (14) est formé au moins par endroits en un matériau au moins partiellement perméable à la lumière.
